# EUROPEAN PATENT SPECIFICATION

(11) **EP 3 485 548 B1**
(45) Date of publication and mention of the grant of the patent: **17.11.2021**
(21) Application number: 16741591.8
(22) Date of filing: 14.07.2016
(51) Int. Cl.: H02G 11/00, B23K 9/10, B23K 9/16, B23K 9/32

(54) **CABLE RETENTION SYSTEM FOR PORTABLE DEVICE**
KABELHALTERUNGSSYSTEM FÜR EIN TRAGBARES GERÄT
SYSTÈME DE RETENUE DE CABLE POUR UN DISPOSITIF PORTABLE

(43) Date of publication of application: 22.05.2019
(73) Proprietor: ESAB AB, 402 77 Göteborg (SE)
(72) Inventor: DEKKER, Jeroen, 424 72 Olofstorp (SE)
(74) Representative: Murgitroyd & Company
(86) International application number: PCT/EP2016/066756
(87) International publication number: WO 2018/010795

(56) References cited:
- EP-A1- 2 633 939
- DE-U1-202006 015 816
- US-A- 5 370 286
- US-A- 5 603 545
- US-A1- 2007 235 422
- US-S1- D 654 519
- Esab: "Caddy Mig C200i Tragbares MIG/MAG Schweißgerät mit integriertem Drahtvorschub für 200 mm Spule", , 6 July 2010 (2010-07-06), XP055357845, Retrieved from the Internet: URL:http://www.mahlke-berlin.de/fileadmin/ images/Produkte/Schweisstechnik/Schweissge raete/MAG/Caddy_Mig_C200i.PDF [retrieved on 2017-03-22]

## Description

### Field of the Disclosure

Embodiments of the present disclosure relate generally to cable retention systems 2. with a portable welding device and an improved support strap with cable retaining regions.

### Background of the Disclosure

Welding operations often need to be performed in remote locations. Many of these remote locations are only accessible to foot traffic. When a welding operation is needed in a remote location that is only accessible to foot traffic, a portable welding device is needed. Welding devices include several components that make them difficult to transport to remote locations, such as lengthy welding cables and a heavy power supply.

Transporting a welding device with dangling and/or unsecure welding cables can be dangerous. For example, welding cables may become tangled in a user's feet or obstacles in the terrain, causing the user to fall and injure themselves and/or damage the welding device. This danger is exacerbated when a user's hands are not free to help maintain balance while carrying the portable welding device.

It is with respect to these and other considerations that the present improvements may be useful.

DE202006015816U1 discloses a portable welding kit having a holding device for a supporting line/wire. US5603545A discloses an adjustable length carrying strap that can be automatically adjusted, with little user manipulation, to tighten around an object to be carried. EP2633939A1 discloses a portable apparatus, particularly for plasma welding or cutting, comprising a box-like body which contains an electronic power board, and a flexible torch holder hose extending from the box-like body and terminating in the torch, for plasma welding or cutting. US2007235422A1 discloses a cable management system for a plasma cutter. US Design Patent 654519S discloses a portable power source for welding. The applicant has previously marketed the "Caddy Mig C200i", which is a portable MIG / MAG welding machine with integrated wire feed for a 200 mm spool. US5370286A discloses a universal adjustable carrying strap which has first and second strap members.

### Summary

According to a first aspect of the present invention there is provided a cable retention system as defined in independent claim 1.

According to a second aspect of the invention there is provided a method for transporting the cable retention system according to the first aspect. The method comprises wrapping a welding cable around a first cable retention member of the portable welding device to place the welding cable in a stored position, securing the welding cable in the stored position by coupling an inner connector of the support strap to the portable welding device, and biasing the welding cable against the portable welding device by lifting the portable welding device by the support strap.

### Brief Description of the Drawings

By way of example, a specific embodiment of the disclosed device will now be described, with reference to the accompanying drawings, in which:
**FIG. 1A** is a perspective view illustrating an exemplary cable retention system in accordance with an embodiment of the present disclosure with welding cables in a first stored position;
**FIG. 1B** is a perspective view illustrating the exemplary cable retention system shown in **FIG. 1A** with the welding cables in a second stored position;
**FIG. 2** is a side view illustrating an exemplary support strap in accordance with an embodiment of the present disclosure;
**FIG. 3** is a cross-section view illustrating an exemplary inner and outer connections between a support strap and a portable welding device in accordance with an embodiment of the present disclosure;
**FIG. 4** is a perspective view illustrating an exemplary inner connector and a corresponding first cable retention member in accordance with an embodiment of the present disclosure;
**FIG. 5** is a cross-section view illustrating an exemplary inner connector and a corresponding first cable retention member in accordance with an embodiment of the present disclosure; and
**FIG. 6** is a logic diagram illustrating an exemplary method of transporting a portable welding device in accordance with an embodiment of the present disclosure.

### Detailed Description

The present embodiments will now be described more fully hereinafter with reference to the accompanying drawings, in which some embodiments are shown. The subject matter of the present disclosure, however, may be embodied in many different forms and should not be construed as limited to the embodiments set forth herein. Rather, these embodiments are provided so that this disclosure will be thorough and complete, and will fully convey the scope of the subject matter to those skilled in the art. In the drawings, like numbers refer to like elements throughout.

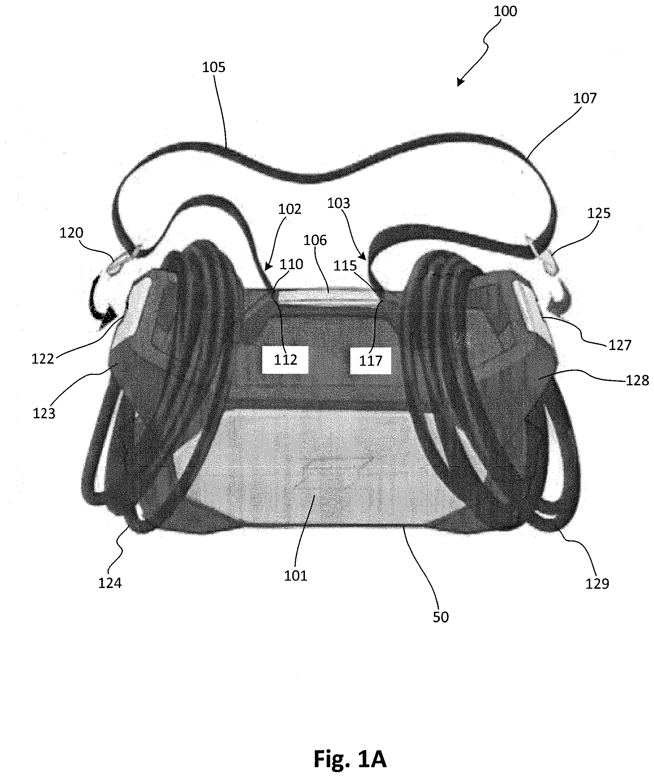

Referring to **FIG. 1A****,** a perspective view illustrating a cable retention system 100 consistent with a non-limiting, exemplary embodiment of the present disclosure is shown. The cable retention system 100 includes a portable device 101, which is a a portable welding device, and a support strap 105 for carrying the portable device 101. The support strap 105 includes a flexible member 107, such as a strip, thong, or belt formed of any suitably durable and flexible material having sufficient tensile strength to support the weight of the portable device 101, such materials including, but not limited to, leather and cloth (e.g., woven nylon). The flexible member may have first and second ends 102, 103. First and second outer connectors 110, 115 and first and second inner connectors 120, 125 are attached to the flexible member 107 as further described below. The portable device 101 may have a housing 50 with features including a central handle 106, first and second welding cables 124, 129, and first and second cable retention members 123, 128. The portable device 101 has first and second outer connector attachment points 112, 117, and first and second inner connector attachment points 122, 127.

The first and second cable retention members 123, 128 may receive respective first and second cables 124, 129. For example, the cable retention members 123, 128 may be formed as protrusions extending from opposing ends of the portable device 101, wherein a user may wrap the welding cables 124, 129 around the cable retention members 123, 128, respectively, thereby placing the cables 124, 129 in a stored position as shown in **FIG. 1A**. Alternatively, the user may wrap the welding cables 124, 129 around the central handle 106 to place the cables in a stored position as shown in **FIG. IB.** Sometimes the cables may be wrapped around one or more of the cable retention members 123, 128 and the central handle 106. As used herein, a welding cable may include any cable utilized in performance of a welding operation. Referring again to **FIG. 1A**, each cable retention member 123, 128 of the portable device 101 can include one of the inner connector attachment points 122, 127, respectively, for attaching the support strap 105. In some embodiments, the outer connector attachment points 112, 117 may form at least a portion of the respective cable retention members 123, 128. The cable retention members 123, 128, may be front and rear lifting handles for the portable device.

It will be appreciated that while the illustrated embodiment of the cable retention members 123, 128 include the components described above, additional components and/or combinations of components are contemplated and may be implemented without departing from the scope of the disclosure. For example, each cable retention member 123, 128 may include a channel or trough formed in, on, or around a periphery of the portable device 101. The channel or trough may generally surround two or more sides of a cable in the stored position, thereby preventing a cable from dangling from the portable device 101. Without cables dangling from the portable device 101 it is less likely the cables will become tangled with a user's feet or an obstacle in the terrain during transportation. In another example, the cable retention system 100 may be provided with only a single cable retention member around which both of the cables 124, 129 may be wrapped.

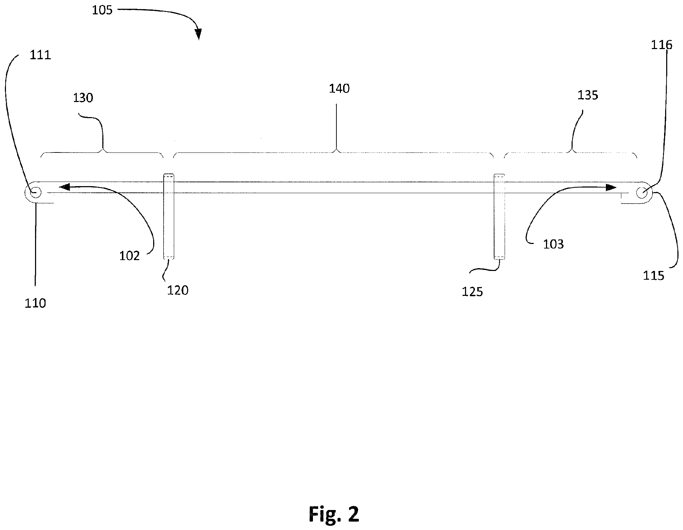

The support strap 105 does fixedly attach to the portable device 101 at first and second outer connector attachment points 112, 117 as well as at first and second inner connector attachment points 122, 127. Selectively attaching/detaching the first and second inner connectors 120, 125 to/from the portable device 101 may allow a user to selectively engage/disengage cable retaining regions 130, 135 **(****FIG. 2****)** of the support strap 105 as further described below.

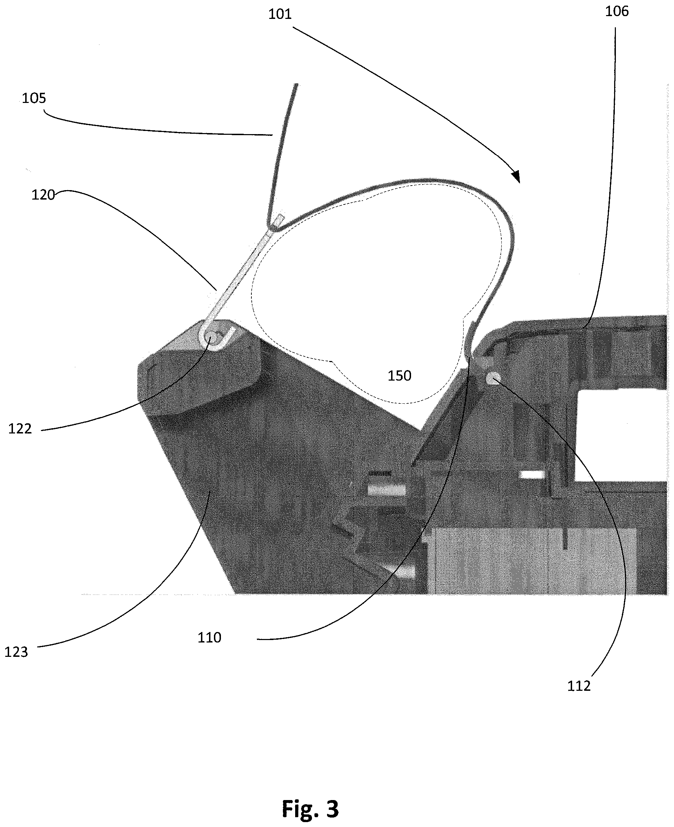

Attaching an inner connector 120, 125 may allow the support strap 105 to secure a respective cable 124, 129 in the stored position. The support strap 105 may secure a cable by spanning a recess or depression created in the periphery of the portable device 101 between respective outer and inner connector attachment points. Once a cable is received by a cable retention member and in the stored position, attaching the corresponding inner connector to the portable device 101 may secure the welding cable in the stored position, thereby creating an opening 150 (FIG. 3) that the cable passes through.

The first and second outer connector attachment points 112, 117 2. pare located closer together on the portable device 101 than the first and second inner connector attachment points 122, 127. In other words, a linear distance between the first and second outer connector attachment points 112, 117 is less than a linear distance between the first and second inner connector attachment points 122, 127. Placing the outer connector attachment points 112, 117 closer together than the inner connectors 122, 127 may allow a user to disengage one or more of the cable retaining regions 130, 135 **(****FIG. 2****)** to change a corresponding cable 124, 129 from the stored position to an extended position without detaching first or second outer connectors 110, 115 from the portable device 101 or passing a cable through a respective opening a plurality of times. A cable may be in an extended position when it is in position to perform a welding operation.

Referring to **FIG. 2****,** a side view of the support strap 105 consistent with a non-limiting, exemplary embodiment of the present disclosure is shown. The first outer connector 110 may be coupled to the flexible member 107 of the support strap 105 proximate the first end 102. The second outer connector 115 may be coupled to the flexible member 107 proximate the second end 103. The first and second inner connectors 120, 125 are attached to the flexible member in between the first and second outer connectors 110, 115. The first inner connector 120 is positioned between the first outer connector 110 and the second inner connector 125 while the second inner connector 125 is positioned between the second outer connector 115 and the first inner connector 120.

A first cable retaining region 130 may include a portion of the support strap 105 located between the first outer connector 110 and the first inner connector 120. The first cable retaining region 130 may secure a first cable 124 in the stored position. A user interface region 140 may include a portion of the support strap 105 located between the first and second inner connectors 120, 125. The user interface region 140 may provide a contact surface for a user when the user is lifting or transporting the portable device 101 by the support strap 105. A second cable retaining region 135 may include a portion of the support strap 105 located between the second inner connector 125 and the second outer connector 115. The second cable retaining region 135 may secure a second cable 129 in the stored position.

The first and second outer connectors 110, 115 may be statically positioned along the support strap 105. In the illustrated embodiment, proximate the first and second ends 102, 103, the flexible member 107 may fold back and be glued or stitched to itself to form support strap openings 111, 116. However, the outer connectors 110, 115 may include eyelets, clamps, or any other type of connector that may be statically positioned along the flexible member 107 as will be appreciated by one of ordinary skill in the art.

The first and second inner connectors 120, 125 can be displaceable along at least a portion of the flexible member 107. The first and second inner connectors 120, 125 may be displaceable along a portion of the flexible member 107 in response to lifting the support strap 105 by the user interface region 140. In some embodiments, the inner connectors 120, 125 may displace when the portable device 101 is lifted by the support strap 105.

As the location of inner connectors 120, 125 change along the flexible member 107, the retaining regions 130, 135 and the user interface region 140 may dynamically resize. When one region 130, 135, 140 of the support strap 105 resizes, at least one other region 130, 135, 140 of the support strap 105 may resize accordingly. For example, when the support strap 105 is lifted by the user interface region 140, the first and/or second cable retaining region may shorten. However, at any time, each region 130, 135, 140 occupies a unique portion of the support strap 105. The inner connectors 120, 125 may include one or more clips, hooks, buckles, rings, or any other type of connector that may readily reposition along the support strap 105 in response to the support strap 105 being lifted by the user interface region 140. In some embodiments, the inner connectors 120, 125 may comprise a hook with a spring-loaded gate such as a karabiner.

It will be appreciated that while the illustrated embodiment of the support strap 105 includes the components described above, additional components and/or combinations of components are contemplated and may be implemented without departing from the scope of the disclosure. For example, a portion of the user interface region 140 may be wider than the cable retaining regions 130, 135. Providing a wider user interface region may increase the available contact surface, thereby reducing user fatigue. In another example, a grommet may be used in conjunction with the eyelet to create more robust outer connectors 110, 115. The support strap 105 may include provisions that will be familiar to those of ordinary skill in the art for adjusting the overall length of the support strap 105 to a desired length.

Referring to **FIG. 3****,** a side view of first inner and outer connections between the support strap 105 and a portable device 101 consistent with a non-limiting, exemplary embodiment of the present disclosure is shown. The first outer connector 110 may couple to the first outer connector attachment point 112. The outer connector attachment point 112 may include one or more of a pin, a screw, a bolt, or any other type of connector that may be used to couple the outer connector 110 to the portable device 101 as will be appreciated by one of ordinary skill in the art. In some embodiments one or more outer connector attachment points may form one or more portions of the central handle 106.

The first inner connector 120 may selectively couple with the inner connector attachment point 122. The inner connector attachment point 122 may include one or more of a pin, a screw, a bolt, a karabiner, or any other type of connector that may be used to selectively and rotatably couple the inner connector 120 to the portable device 101 as will be appreciated by one of ordinary skill in the art. In some embodiments, the support strap 105 may require constant tension in a direction away from the inner connector attachment point 122 to reliably stay attached to the portable device 101.

For example, the inner connector 120 may include a hook. The hook may enable a user to readily disconnect the inner connector 120 when the support strap 105 is not carrying the weight of the portable device 101, however the hook will not reliably stay attached unless the user interface region 140 **(****FIG. 2****)** is tensioned by the weight of the portable device 101. The hook may include an opening or a slot to couple to the support strap 105 while still allowing the hook to move along the length of the support strap 105, thereby allowing the cable retaining regions 130, 135 to secure respective cables 124, 129. In other embodiments the support strap may not include inner connectors 120, 125. In these embodiments the inner connector attachment points 122, 127 may serve the function of the absent inner connectors 120, 125. For example, inner connector attachment points 122, 127 may include a hook to couple with support strap 105.

When the support strap 105 is carrying the weight of the portable device 101 and the inner connectors are attached to the portable welding device at the respective attachment points, then all the weight of the portable welding device can be transmitted to the ground at least in part by passing through the inner connectors. Transmitting the weight of the portable device 101 to the ground through the inner connectors may insure the inner connectors stay tensely connected to the inner connector attachment points 122, 127, thereby limiting unintentional detachment of the inner connectors from the portable welding device. In some embodiments, the inner connectors may include a spring-loaded gate to avoid unintentional detachment of the inner connector.

Referring again to **FIG. 3****,** when the first outer connector 110 and the first inner connector 120 are both coupled to the portable device 101 an opening 150 may form at least in part between the first cable retaining region 130 **(****FIG. 2****)** of the support strap 105 and the portable device 101. If a cable is in the stored position around the first cable retention member 123 and the inner connector 120 is attached to the inner connector attachment point 122, then the cable may pass through the opening 150. When the portable welding device is lifted by the user interface region 140 (FIG. 2), the size of the first cable retaining region may be reduced as the inner connector 120 moves along the support strap 105 as the tension increases. This may reduce the size of the opening 150, thereby biasing the cable against the portable device 101.

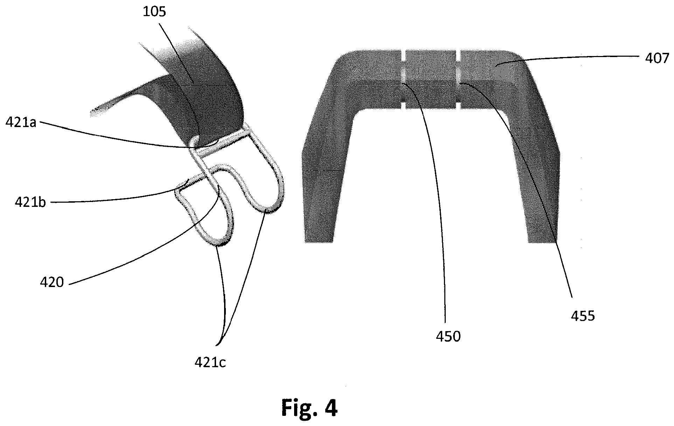

Referring to **FIG. 4****,** an inner connector 420 and a front view of a corresponding cable retention member 407 consistent with a non-limiting, exemplary embodiment of the present disclosure is shown. The inner connector 420 can include a support strap opening 421a, an inner connector latch 421b, and inner connector hooks 421c. The cable retention member 407 may include an inner connector attachment point comprising first and second grooves 450, 455. The grooves 450, 455 may receive the inner connector hooks 421c. When the inner connector hooks are received by the grooves 450, 455, at least a portion of the inner connector latch 421b may be retained by a portion of the raised surface located between the first and second grooves 450, 455. The support strap 105 may be configured to pass through with the support strap opening 421 while still allowing the inner connector 420 to move along the support strap 105.

In some embodiments the cable retention members of portable device 101 are interchangeable. For example, the cable retention members of various embodiments described herein may be selectively installed on a portable device 101. Referring again to **FIG. 4****,** the cable retention member 407 comprises a handle. One or more handles may provide a user with ridge interface regions when they are coupled to the portable device 101.

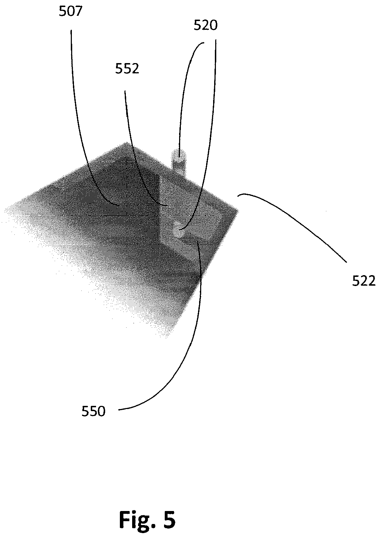

Referring to **FIG. 5****,** a side view of an inner connector 520 and a corresponding cable retention member 507 consistent with a non-limiting, exemplary embodiment of the present disclosure is shown. The cable retention member 507 may include an inner connector attachment point 522 comprising an inner connector receiving slot, 550 and a reinforcing member 552. The inner connector receiving slot 550 may receive the inner connector 520. The inner connector 520 may need to be biased inwards in order to maintain a reliable connection with the inner connector attachment point in the cable retention member 507. In some embodiments a feature of the inner connector receiving slot 550, such as a ball detent or other mechanical arrangement, may bias the inner connector 520 inwards.

The reinforcing member 552 may strengthen the inner connector receiving slot 550, preventing it from breaking under heavier loads. In some embodiments the reinforcing member 552 may increase the rigidity of the inner connector attachment point 522.

The inner connectors described can be used with any outer connecters described unless they are mutually exclusive. Further, different types, styles, or combinations of inner and/or outer connectors could be used on a support strap. For example, each type of connector on the support strap can be individually selected to serve specific purposes.

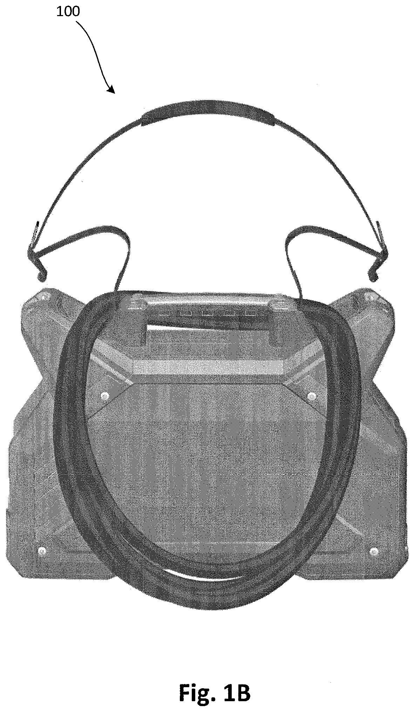

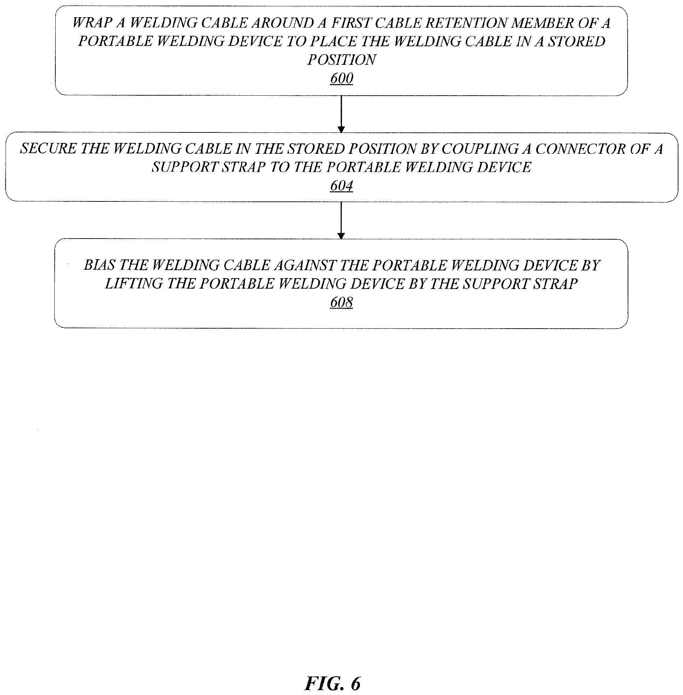

Referring now to **FIG. 6****,** a logic diagram illustrating an exemplary method in accordance with an embodiment of the present disclosure is shown. In particular, the method is directed toward transporting a portable welding device and more specifically to securing and biasing a welding cable to a portable welding device with the components described herein. The method will now be described in detail with reference to the system 100 and various components shown in **FIGS. 1-5****.**

As shown in block 600, a welding cable 124, 129 can be placed in a stored position by wrapping the welding cable around a cable retention member 123, 128 of a portable device 101. In block 604, the welding cable can be secured in the stored position by coupling a connector 120, 125 of a support strap 105 to the portable device 101. In some embodiments, securing the welding cable 124, 129 in the stored position may create an opening 150 that the welding cable passes through. In some embodiments, the opening 150 is created at least in part between the cable retention member 123, 128 and the support strap 105.

The welding cable 124, 129 may be biased against the portable device 101 by lifting the portable welding device by the support strap 105 at block 608. In some embodiments, lifting the portable device 101 by the support strap 105 may reposition the connector 120, 125 along the support strap. In some embodiments, the welding cable 124, 129 may be changed from the stored position to an extended position by decoupling the connector 120, 125 of the support strap 105 from the portable device 101 and unwrapping the welding cable from the cable retention member 123, 128.

As used herein, an element or operation recited in the singular and proceeded with the word "a" or "an" should be understood as not excluding plural elements or operations, unless such exclusion is explicitly recited. Furthermore, references to "one embodiment" of the present disclosure are not intended to be interpreted as excluding the existence of additional embodiments that also incorporate the recited features.

## Claims

1. A cable retention system comprising:
a portable welding device (101); a support strap (105) for carrying the portable welding device (101) including first and second outer connectors (110,115) and first and second inner connectors (120,125) coupled to a flexible member (107), wherein the first inner connector (120) is positioned along the flexible member (107) between the first outer connector (110) and the second inner connector (125) and the second inner connector (125) is positioned along the flexible member (107) between the second outer connector (115) and the first inner connector (120); and
the portable welding device (101) including first and second outer connector attachment points (112,117) and first and second inner connector attachment points (122,127), wherein the first and second outer connectors (110,115) of the support strap (105) are connected to the first and second outer connecter attachment points, respectively, and the first and second inner connectors (120,125) of the support strap are connected to the first and second inner connecter attachment points, respectively, wherein a linear distance between the first and second outer connector attachment points is less than a linear distance between the first and second inner connector attachment points; wherein the first and second inner connectors (120,125) are displaceable along at least a portion of the flexible member (107).

2. The cable retention system of claim 1, wherein the first and second outer connectors (110,115) are statically positioned along the flexible member (107).

3. The cable retention system of claim 1, the portable welding device (101) comprising a welding cable (124).

4. The cable retention system of claim 3, the portable welding device (101) comprising a first cable retention member (123), wherein the welding cable (124) is received by the first cable retention member when the welding cable is in a stored position.

5. The cable retention system of claim 4, the first cable retention member (123) including a channel or trough, wherein the welding cable (124) is at least partially disposed within the channel or trough when the welding cable is in the stored position.

6. The cable retention system of claim 4, the first cable retention member (123) comprising a handle for lifting the portable welding device (101).

7. The cable retention system of claim 1, the portable welding device (101) comprising a central handle (106) including at least a portion of the first or second outer connector attachment points (112,117).

8. The cable retention system of claim 4, wherein an opening (150) is formed at least in part by the first cable retention member (123) and the support strap (105) when the first inner and outer connectors (120,110) are coupled to the first inner and outer connector attachment points (122,112).

9. A method for transporting the cable retention system of claim 1, the method comprising:
wrapping a welding cable (124) around a first cable retention member (123) of the portable welding device (101) to place the first welding cable in a stored position;
securing the welding cable (124) in the stored position by coupling the first inner connector (120) of the support strap (105) to the portable welding device (101); and
biasing the welding cable (124) against the portable welding device (101) by lifting the portable welding device by the support strap (105).

10. The method of claim 9, wherein securing the welding cable (124) in the stored position comprises creating an opening (150) that the welding cable passes through.

11. The method of claim 10, wherein the opening (150) is created at least in part by the first cable retention member (123) and the support strap (105).

12. The method of claim 9, wherein lifting the portable welding device (101) by the support strap (105) displaces the inner connector (120) along the flexible member (107) of the support strap.

13. The method of claim 9, comprising moving the welding cable (124) from the stored position to an extended position by decoupling the inner connector (120) of the support strap (105) from the portable welding device (101) and unwrapping the first welding cable from the first cable retention member (123).

## Patentansprüche

1. Ein Kabelhalterungssystem, das Folgendes beinhaltet:
eine tragbare Schweißvorrichtung (101);
ein Halteband (105) zum Tragen der tragbaren Schweißvorrichtung (101), das einen ersten und zweiten äußeren Verbinder (110, 115) und einen ersten und zweiten inneren Verbinder (120, 125), die mit einem flexiblen Element (107) gekoppelt sind, umfasst, wobei der erste innere Verbinder (120) entlang dem flexiblen Element (107) zwischen dem ersten äußeren Verbinder (110) und dem zweiten inneren Verbinder (125) positioniert ist und der zweite innere Verbinder (125) entlang dem flexiblen Element (107) zwischen dem zweiten äußeren Verbinder (115) und dem ersten inneren Verbinder (120) positioniert ist; und
wobei die tragbare Schweißvorrichtung (101) Befestigungspunkte (112, 117) für den ersten und zweiten äußeren Verbinder und Befestigungspunkte (122, 127) für den ersten und zweiten inneren Verbinder umfasst, wobei der erste und zweite äußere Verbinder (110, 115) des Haltebands (105) mit den Befestigungspunkten für den ersten bzw. zweiten äußeren Verbinder verbunden sind und der erste und zweite innere Verbinder (120, 125) des Haltebands mit den Befestigungspunkten für den ersten bzw. zweiten inneren Verbinder verbunden sind, wobei eine lineare Distanz zwischen den Befestigungspunkten für den ersten und zweiten äußeren Verbinder geringer als eine lineare Distanz zwischen den Befestigungspunkten für den ersten und zweiten inneren Verbinder ist; wobei der erste und zweite innere Verbinder (120, 125) entlang mindestens einem Teil des flexiblen Elements (107) verschiebbar sind.

2. Kabelhalterungssystem gemäß Anspruch 1, wobei der erste und zweite äußere Verbinder (110, 115) entlang dem flexiblen Element (107) statisch positioniert sind.

3. Kabelhalterungssystem gemäß Anspruch 1, wobei die tragbare Schweißvorrichtung (101) ein Schweißkabel (124) beinhaltet.

4. Kabelhalterungssystem gemäß Anspruch 3, wobei die tragbare Schweißvorrichtung (101) ein erstes Kabelhalterungselement (123) beinhaltet, wobei das Schweißkabel (124) von dem ersten Kabelhalterungselement aufgenommen wird, wenn sich das Schweißkabel in einer Lagerungsposition befindet.

5. Kabelhalterungssystem gemäß Anspruch 4, wobei das erste Kabelhalterungselement (123) einen Kanal oder eine Wanne umfasst, wobei das Schweißkabel (124) zumindest teilweise innerhalb des Kanals oder der Wanne angeordnet ist, wenn sich das Schweißkabel in der Lagerungsposition befindet.

6. Kabelhalterungssystem gemäß Anspruch 4, wobei das erste Kabelhalterungselement (123) einen Griff zum Anheben der tragbaren Schweißvorrichtung (101) beinhaltet.

7. Kabelhalterungssystem gemäß Anspruch 1, wobei die tragbare Schweißvorrichtung (101) einen zentralen Griff (106) beinhaltet, der mindestens einen Teil der Befestigungspunkte (112, 117) für den ersten oder zweiten äußeren Verbinder umfasst.

8. Kabelhalterungssystem gemäß Anspruch 4, wobei zumindest teilweise von dem ersten Kabelhalterungselement (123) und dem Halteband (105) eine Öffnung (150) gebildet wird, wenn der erste innere und äußere Verbinder (120, 110) mit den Befestigungspunkten (122, 112) für den ersten inneren und äußeren Verbinder gekoppelt werden.

9. Ein Verfahren zum Transportieren des Kabelhalterungssystems gemäß Anspruch 1, wobei das Verfahren Folgendes beinhaltet:
Wickeln eines Schweißkabels (124) um ein erstes Kabelhalterungselement (123) der tragbaren Schweißvorrichtung (101), um das erste Schweißkabel in einer Lagerungsposition zu platzieren;
Sichern des Schweißkabels (124) in der Lagerungsposition durch das Koppeln des ersten inneren Verbinders (120) des Haltebands (105) mit der tragbaren Schweißvorrichtung (101); und
Vorspannen des Schweißkabels (124) gegen die tragbare Schweißvorrichtung (101) durch das Anheben der tragbaren Schweißvorrichtung durch das Halteband (105).

10. Verfahren gemäß Anspruch 9, wobei das Sichern des Schweißkabels (124) in der Lagerungsposition das Schaffen einer Öffnung (150) beinhaltet, durch die das Schweißkabel läuft.

11. Verfahren gemäß Anspruch 10, wobei die Öffnung (150) zumindest teilweise von dem ersten Kabelhalterungselement (123) und dem Halteband (105) geschaffen wird.

12. Verfahren gemäß Anspruch 9, wobei das Anheben der tragbaren Schweißvorrichtung (101) durch das Halteband (105) den inneren Verbinder (120) entlang dem biegsamen Element (107) des Haltebands verschiebt.

13. Verfahren gemäß Anspruch 9, das das Bewegen des Schweißkabels (124) von der Lagerungsposition in eine ausgestreckte Position durch das Entkoppeln des inneren Verbinders (120) des Haltebands (105) von der tragbaren Schweißvorrichtung (101) und das Abwickeln des ersten Schweißkabels von dem ersten Kabelhalterungselement (123) beinhaltet.

## Revendications

1. Un système de retenue de câble comprenant :
un dispositif de soudage portable (101) ;
une sangle de suspension (105) pour porter le dispositif de soudage portable (101) incluant des premier et deuxième raccords externes (110, 115) et des premier et deuxième raccords internes (120, 125) couplés à un élément flexible (107), où le premier raccord interne (120) est positionné le long de l'élément flexible (107) entre le premier raccord externe (110) et le deuxième raccord interne (125) et le deuxième raccord interne (125) est positionné le long de l'élément flexible (107) entre le deuxième raccord externe (115) et le premier raccord interne (120) ; et
le dispositif de soudage portable (101) incluant des premier et deuxième points d'attache de raccords externes (112, 117) et des premier et deuxième points d'attache de raccords internes (122, 127), où les premier et deuxième raccords externes (110, 115) de la sangle de suspension (105) sont raccordés aux premier et deuxième points d'attache de raccords externes, respectivement, et les premier et deuxième raccords internes (120, 125) de la sangle de suspension sont raccordés aux premier et deuxième points d'attache de raccords internes, respectivement, où une distance linéaire entre les premier et deuxième points d'attache de raccords externes est inférieure à une distance linéaire entre les premier et deuxième points d'attache de raccords internes ; où les premier et deuxième raccords internes (120, 125) sont déplaçables le long d'au moins une portion de l'élément flexible (107).

2. Le système de retenue de câble de la revendication 1, où les premier et deuxième raccords externes (110, 115) sont positionnés de manière statique le long de l'élément flexible (107).

3. Le système de retenue de câble de la revendication 1, le dispositif de soudage portable (101) comprenant un câble de soudage (124).

4. Le système de retenue de câble de la revendication 3, le dispositif de soudage portable (101) comprenant un premier élément de retenue de câble (123), où le câble de soudage (124) est reçu par le premier élément de retenue de câble lorsque le câble de soudage est dans une position de rangement.

5. Le système de retenue de câble de la revendication 4, le premier élément de retenue de câble (123) incluant un canal ou chemin, où le câble de soudage (124) est au moins partiellement disposé au sein du canal ou chemin lorsque le câble de soudage est dans la position de rangement.

6. Le système de retenue de câble de la revendication 4, le premier élément de retenue de câble (123) comprenant une poignée pour soulever le dispositif de soudage portable (101).

7. Le système de retenue de câble de la revendication 1, le dispositif de soudage portable (101) comprenant une poignée centrale (106) incluant au moins une portion des premier ou deuxième points d'attache de raccords externes (112, 117).

8. Le système de retenue de câble de la revendication 4, où une ouverture (150) est formée au moins en partie par le premier élément de retenue de câble (123) et la sangle de suspension (105) lorsque les premiers raccords interne et externe (120, 110) sont couplés aux premiers points d'attache de raccords interne et externe (122, 112).

9. Un procédé pour transporter le système de retenue de câble de la revendication 1, le procédé comprenant le fait :
d'enrouler un câble de soudage (124) autour d'un premier élément de retenue de câble (123) du dispositif de soudage portable (101) afin de placer le premier câble de soudage dans une position de rangement ;
d'assujettir le câble de soudage (124) dans la position de rangement en couplant le premier raccord interne (120) de la sangle de suspension (105) au dispositif de soudage portable (101) ; et
d'inciter le câble de soudage (124) à se plaquer contre le dispositif de soudage portable (101) en soulevant le dispositif de soudage portable par la sangle de suspension (105).

10. Le procédé de la revendication 9, où le fait d'assujettir le câble de soudage (124) dans la position de rangement comprend le fait de créer une ouverture (150) au travers de laquelle passe le câble de soudage.

11. Le procédé de la revendication 10, où l'ouverture (150) est créée au moins en partie par le premier élément de retenue de câble (123) et la sangle de suspension (105).

12. Le procédé de la revendication 9, où le fait de soulever le dispositif de soudage portable (101) par la sangle de suspension (105) déplace le raccord interne (120) le long de l'élément flexible (107) de la sangle de suspension.

13. Le procédé de la revendication 9, comprenant le fait de faire passer le câble de soudage (124) de la position de rangement à une position d'extension en découplant le raccord interne (120) de la sangle de suspension (105) du dispositif de soudage portable (101) et en déroulant le premier câble de soudage du premier élément de retenue de câble (123).
